Europäisches Patentamt

European Patent Office

Office européen des brevets

(19)

(11) Publication number: **0 048 774**
A1

(12) **EUROPEAN PATENT APPLICATION**

(21) Application number: **80303288.7**

(22) Date of filing: **18.09.80**

(51) Int. Cl.³: **H 01 M 6/14, H 01 M 2/16**

(43) Date of publication of application: **07.04.82**
**Bulletin 82/14**

(84) Designated Contracting States: **DE FR GB IT NL**

(71) Applicant: **Catanzarite, Vincent Owen, 7044 Mira Vista, Las Vegas Nevada 89120 (US)**

(72) Inventor: **Catanzarite, Vincent Owen, 7044 Mira Vista, Las Vegas Nevada 89120 (US)**

(74) Representative: **Allard, Susan Joyce et al, BOULT, WADE & TENNANT 27 Furnival street, London EC4A 1PQ (GB)**

(54) **Electrochemical cell.**

(57) An electrochemical cell having an alkali metal anode (34), a cathode, an electrolyte (40) and an anode neutralizing agent (38) consisting of an inorganic solid positioned adjacent to the anode. The agent is nonreactive with all cell chemicals below a predetermined temperature near the melting point of the anode. At the predetermined temperature, the agent and anode enter into endothermic or at most mildly exothermic reaction.

EP 0 048 774 A1

-1-
ELECTROCHEMICAL CELL

This invention relates to high energy electrochemical power cells. More particularly, it relates to cells having an oxidizable anode material that is chemically very active and under certain circumstances explosive in the presence of other cell components unless precisely controlled.

Recently there has been a rapid growth in portable electronic products requiring electrochemical cells to supply the energy. Examples are calculators, cameras and digital watches. These products, however, have highlighted the deficiencies of the existing power cells for demanding applications. For example, digital watches were developed using the silver oxide cell, and although these watches have become popular, it is now generally recognized that the least developed component of the digital watch system is the power cell. In particular, the energy density of the silver cells is such that thin, stylish watches with reasonable operating life are difficult to make. Additionally, these cells have poor storage characteristics, low cell voltages, and leakage problems.

In an effort to develop a cell that addresses one or more of the foregoing problems, substantial work has been done with cell chemistries using an alkali metal anode and particularly lithium. The cathode and electrolyte material consisting of a solvent and solute vary. Indeed, the literature is replete with examples of alkali metal anode cells with different cathodes and electrolytes. The electrical characteristics of these cells such as engery per unit volume, called energy density; cell voltage; and internal impedance vary greatly.

Although cells of the foregoing type offer many advantages, there are still several problems to be solved before they can be made widely available. Foremost among these problems is safety. Many of the new breed cells, particularly the higher power cells using lithium anodes, are explosive if the cell reaches a temperature at which the anode becomes liquid. This problem is particularly pronounced in cells having lithium anode and a liquid cathode consisting of solute dissolved in an oxyhalide or thiohalide solvent.

It is therefore an object of this invention to decrease the risk of explosion in an electrochemical cell having an alkali metal anode as a result of molten anode material reacting with other cell chemicals.

This is achieved by the inclusion in an electrochemical cell having an alkali metal anode, a cathode spaced therefrom and an electrolyte in contact with the cathode and anode, an anode neutralizing agent which is reactive with the anode at about the melting point thereof, with the reaction between the agent and anode being either endothermic, neutral or only mildly exothermic. The said agent is preferably an inorganic solid positioned adjacent the said anode, the agent being substantially nonreactive with all cell chemicals or reaction by-products below a predetermined temperature around the melting temperature of the said anode. In a preferred emodiment the agent may take the form of a ceramic material and in the case of a lithium anode, a 95 percent alumina, 5 percent silicate ceramic in the form of a fiberous paper that also acts as a separator between anode and cathode is preferred.

Figure 1 is a perspective view of an electrochemical cell useful for illustrating the present invention.

Figure 2 is a cross-sectional view of the cell of Figure 1.

Among all of the known combinations of lithium anodes with different cathodes and electrolytes, those believed to have among the highest energy density and lowest internal impedance

0048774

-4-

use certain inorganic liquids as the active cathode depolarizer. This type of cell chemistry is commonly referred to as "liquid Cathode", and it is with respect to this general chemistry that the preferred embodiment will be described. First, however, it is desirable to describe the liquid cathode cells.

Early liquid cathode cells used liquid sulfur dioxide as the active cathode depolarizer as described in U. S. Patent No. 3,567,515 issued to Maricle et al. on March 2, 1971. Since sulfur dioxide is not a liquid at room temperature and at atmospheric pressure, it proved to be quite a difficult chemistry with which to work. More importantly, sulfur dioxide cells are unsafe for most consumer applications due to their propensity to explode under certain circumstances.

A major step forward in the development of liquid cathode cells was the discovery of a class of inorganic materials, generally called oxyhalides, that are liquids at room temperature and also perform the function of being the active cathode depolarizer. Additionally, these materials may also be used as the electrolyte solvent. Liquid cathode cells using oxyhalides are described in U.S. Patent No. 3,926,669 issued to Auborn on December 16, 1975, and in British Patent No. 1,409,307 issued to Blomgren et al. on October 18, 1975. At least one of the oxyhalides, thionyl chloride ($SOCl_2$), in addition to having the general characteristics described above, also provides substantial additional energy density.

As described in the Auborn and Blomgren patents, the anode is lithium metal or alloys of lithium and the electrolyte solution is an ionically conductive solute dissolved in a solvent that is also an active cathode depolarizer.

**0048774**

The solute may be a simple or double salt which will produce an ionically conductive solution when dissolved in the solvent. Preferred solutes are complexes of inorganic or organic Lewis acids and inorganic ionizable salts. The requirements for utility are that the salt, whether simple or complex, be compatible with the solvent being employed and that it yield a solution which is ionically conductive. According to the Lewis or electronic concept of acids and bases, many substances which contain no active hydrogen can act as acids or acceptors or electron doublets. In U.S. Patent No. 3,542,602 it is suggested that the complex or double salt formed between a Lewis acid and an ionizable salt yields an entity which is more stable than either of the components alone.

Typical Lewis acids suitable for use in the present invention include aluminum chloride, antimony pentchloride, zirconium tetrachloride, phosphorus pentchloride, boron fluoride, boron chloride and boron bromide.

Ionizable salts useful in combination with the Lewis acids include lithium fluoride, lithium chloride, lithium bromide, lithium sulfide, sodium fluoride, sodium chloride, sodium bromide, potassium fluoride, potassium chloride and potassium bromide.

The double salts formed by a Lewis acid and an inorganic ionizable salt may be used as such or the individual components may be added to the solvent separately to form the salt. One such double salt, for example, is that formed by the combination of aluminum chloride and lithium chloride to yield lithium aluminum tetrachloride.

In addition to an anode, active cathode depolarizer and ionically conductive electrolyte, these cells require a current collector.

0048774

According to Blomgren, any compatible solid, which is substantially electrically conductive and inert in the cell, will be useful as a cathode collector since the function of the collector is to permit external electrical contact to be made with the active cathode material. It is desirable to have as much surface contact as possible between the liquid cathode and the current collector. Therefore, a porous material is preferred since it will provide a high surface area interface with the liquid cathode material. The current collector may be metallic and may be present in any physical form such as metallic film, screen or a pressed powder. Examples of some suitable metal current collectors are provided in Table II of the Auborn Patent. The current collector may also be made partly or completely of carbon. Examples provided in the Blomgren Patent use graphite.

Electrical separation of current collector and anode is required to insure that cathode or anode reactions do not occur unless electrical current flows through an external circuit. Since the current collector is insoluble in the electrolyte and the anode does not react spontaneously with the electrolyte, a mechanical separator may be used.

In many of the cells to which the present invention is directed, the anode is chemically stable with all of the original cell chemicals--at least at normal operating temperatures. However, new chemicals not originally present in a fresh cell often are created either as normal discharge by-products, as the result of electrolysis from an externally imposed current or from high temperature. Typically the new chemicals are found in the cathode material and are, if solid, isolated from the lithium. However, molten lithium readily passes through most separators and can then react with the chemicals in the cathode.

Applicant has discovered that it is possible to design certain materials that will neutralize the anode above a certain predetermined temperature. By neutralization of the anode is meant to react the anode with the neutralizing agent such that the resultant material is chemically non-reactive with the remaining cell chemicals, discharge by-product or electrolysis products. Additionally, the reaction between the anode and neutralizing agent is preferably endothermic and at worst mildly exothermic. By mildly exothermic is meant that the energy released by the reaction cannot of itself be sufficient to create any appreciable risk of explosion. Moreover, the reaction between the anode and neutralizing agent must occur near the melting point of the anode; and since different anodes melt at different temperatures, it must be possible to engineer the neutralizing agent to accommodate different anode materials. Finally, below the critical predetermined temperature, the neutralizing agent cannot interfere with the normal operation of the cell, either chemically, electrically or mechanically.

Applicant has found that inorganic insulators, namely glasses and ceramics (these terms will be used interchangably hereinafter) meet the foregoing requirements. These materials are usually made from metal oxides with each such metal oxide being a phase of the total glass or ceramic. (The principal distinction between a glass and a ceramic is that ceramics have a crystalline structure and glasses do not.) The chemical and physical properties of these materials useful in the present invention are summarized graphically in what is called a phase diagram which shows the melting point of the material as a function of the percentage and type of metal oxide in each phase. With most ceramics, there is a minimum temperature above which certain other materials will react to form a new ceramic. Below this temperature, virtually no reaction takes place. Above this temperature, a reaction does occur to form the new ceramic and the percentage that the material makes up of the new ceramic is dependent upon how high the temperature is above the minimum temperature. Given a known material such as a specific alkali metal, it is possible to find a ceramic with which it will react at a predetermined temperature either above or below the melting point of the alkali metal. Thus, it is possible to choose a glass or ceramic that forms a phase with an anode at exactly the right temperature to preclude the anode from liquifying, but not to preclude normal cell operation. Also, the inclusion of an additional phase in a glass or ceramic is usually an endothermic reaction.

In order for the invention to work most effectively, the neutralizing agent must be spaced between the anode and cathode. However, it cannot interfere with the flow of electrolyte. In other words, it must be porous. Applicant has also found that these materials are good separators. Accordingly, an aspect of applicant's invention is the utilization of the same member as both the separator and neutralization agent.

Turning now to the drawings, wherein like components are designated by like reference numerals in the various figures, an electrochemical cell constructed in accordance with the present invention is illustrated and generally designated by the reference number 10. While the particular cell illustrated is a button battery, it will become apparent hereinafter that all cells including the larger sized cells may incorporate the various features of the present invention to be described with respect to cell 10.

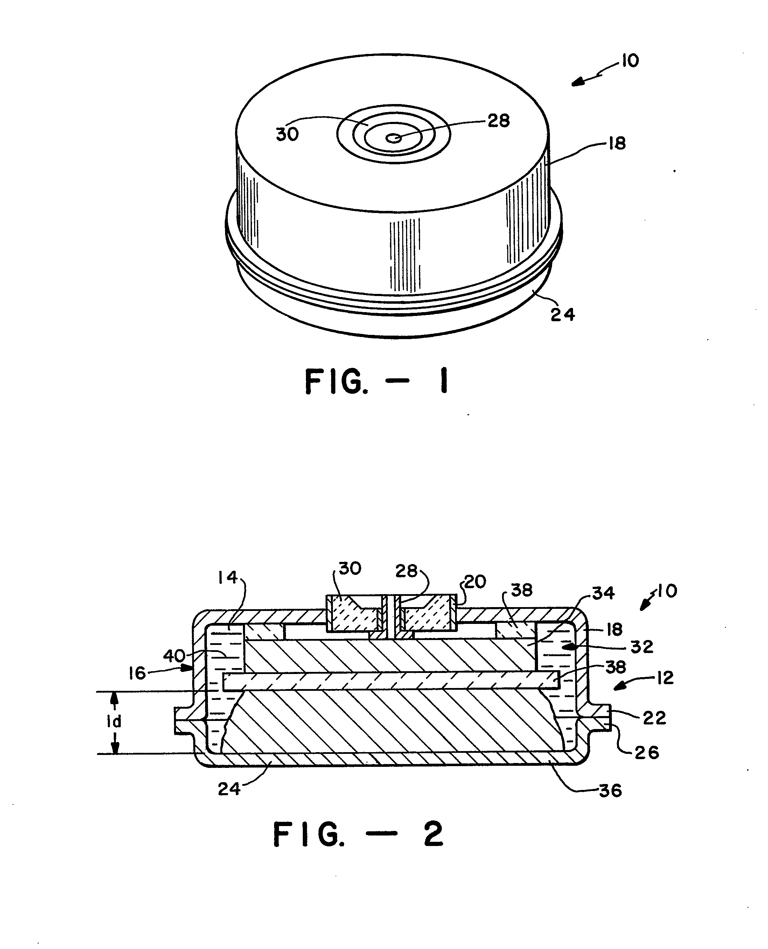

Referring now to Figures 1 and 2, cell 10 is shown to include an overall casing arrangement 12 which defines an internal, fluid tight chamber 14. This overall casing arrangement includes a casing 16 which is comprised of a top cover 18 having a central opening 20 extending through its top end and an outwardly flared circumferential flange 22 located at and around its bottom end. The casing also includes a bottom cover 24 having an outwardly flared circumferential flange 26 which is welded or otherwise suitably fastened to the top cover around the underside of flange 22, as best illustrated in Figure 2. The casing may be of any desired shape and constructed of any suitable material, so long as the selection is compatible with the present invention. However, the casing is preferably identical in design to the casing described in co-pending United States Patent Application S.N. 840,522, filed on October 11, 1977, and assigned to Applicant of the present invention.

In addition to casing 16, the overall casing arrangement 12 includes a pair of electrically insulated terminals, one of which is the casing itself. The other electrode 28, is constructed of any suitable electrically conductive material, such as stainless steel. Electrode 28 may be utilized to introduce the cell's liquid constituent into compartment 14 and, hence, may be tubular. This terminal extends through opening 20 and is spaced from top cover 18 such that one section of the terminal is positioned ouside the casing.

In order to isolate terminal 28 from the casing, overall casing arrangement 12 also includes a circumferential insulation member 30 which is located within and which fills opening 20 in top cover 18, concentrically around terminal 28, thereby insulating this terminal from the casing. The outer circumferential surface of the insulator is bonded in a continuous fashion to the top cover 18 around opening 20 and its inner circumferential surface is bonded in a continuous fashion to and around the outer surface of terminal 28. In a preferred embodiment, insulator 30 is a ceramic insulator described more fully in British Patent Specification No. 2005908.

In addition to overall casing arrangement 12, battery 10 includes an arrangement of chemically interacting components which are generally designated at 32 in Figure 2 and which produce the desired voltage difference across the cell terminals.

These components include an anode 34 and a solid cathode 36 spaced from and in a plane parallel to anode 34. Separator 38 mechanically separates the anode from solid cathode.

Anode 34 is an alkali metal such as lithium, sodium, potassium, calcium; but in a preferred embodiment it is lithium.

Separator 38 is also the anode neutralizing agent and is a fiberous sheet material made from a two-phase ceramic consisting of 95 percent (by dry weight) $AL_2O_3$ and 5 percent $SiO_2$. This two-phase ceramic system in the presence of lithium, converts to a three-phase lithium rich ceramic system below or at the melting point of lithium.

Cathode collector 36 consists of a high surface area carbon such as acetylene black. In addition to these components, the overall voltage difference producing arrangement includes an electrolyte solution, preferably of the type previously described including a solute (salt) and a solvent which also acts as the active cathode depolarizer (liquid cathode) generally designated at 40. This solution is located within and fills chamber 14 and thus is in direct contact with the anode, cathode collector and inner surface of casing 16.

It is understood that the foregoing specific embodiment is included for purposes of illustration, and is not intended to limit the scope of applicant's invention which is defined in the following claims.

CLAIMS:

1. An electrochemical cell having an alkali metal anode (34), a cathode (40) and an electrolyte (40), characterised in that it includes an agent (38) capable of reacting with the metal of the anode (34) at a temperature near the melting point of the anode to render the anode substantially nonreactive with other cell chemicals when the cell exceeds the said temperature.

2. An electrochemical cell having as active components, an alkali metal anode (34), a cathode (40) and an electrolyte (40), characterised in that it includes an anode neutralizing agent (38) which is an inorganic insulator capable of including the said anode (34) as a phase thereof at a predetermined temperature near the melting temperature of the anode whereby the anode material is rendered substantially nonreactive with other cell chemicals when the cell exceeds the said predetermined temperature.

3. A cell according to Claim 1 or Claim 2 wherein the anode (34) is lithium or sodium.

4. A cell according to any one of Claims 1 to 3 wherein the said agent (38) is a multi-phase ceramic.

5. A cell according to any one of Claims 1 to 4 wherein the said agent (38) is located contiguous to said anode.

6.    A cell according to claim 5 wherein the said agent also performs the function of physically and electrically separating the anode from the cathode.

7.    An electrochemical cell comprising:

(a) a casing arrangement (12) defining a fluid sealed inner compartment and including means defining first and second electrically insulated terminals (16, 28);

(b) means located within said compartment and cooperating with said first and second terminal defining means for producing a voltage difference across said terminal, said voltage difference producing means including a lithium anode (34); a cathode and an electrolyte (40) characterised in that the cell also comprises

(c) ceramic means (38) located between said anode and cathode, said ceramic means having a composition such that said lithium anode and ceramic means react at a predetermined temperature to form a new ceramic material that is substantially non-reactive with the remaining cell chemicals, said reaction being at most mildly exothermic.

8.    A cell according to claim 7 wherein said predetermined temperature is the melting point of lithium.

9. A cell according to claim 8 wherein the said ceramic means is a two-phase ceramic consisting essentially of about 95 percent $Al_2O_3$ and 5 percent $SiO_2$ weight.

10. A cell according to claim 7 wherein said electrolyte is a solute dissolved in thionyl chloride.

SJA/EA253

1/1

10

30 · 28

18

24

FIG. — I

14   30   28   20   38   34   10

18

40   32

16   12

Id   22

26

24   36

FIG. — 2

European Patent
Office

**EUROPEAN SEARCH REPORT**

004 8774

Application number

EP 80 30 3288

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | US - A - 4 167 608 (L.R. GIATTINO)<br>* Column 1, line 52; column 3, lines 5,6; column 4, line 29 *<br><br>-- | 1-8,10 | H 01 M 6/14<br>H 01 M 2/16 |
|  | GMELINS HANDBUCH DER ANORGANISCHEN CHEMIE, 8. Auflage, Ergänzungsband Verlag Chemie 1960, Seite 211 "Siliciumverbindungen"<br><br>-- | 1-10 | |
|  | US - A - 3 985 573 (UNION CARBIDE CORP.)<br>* Column 4, lines 65,66; column 5, line 61 - column 6, line 6 *<br><br>-- | 1-10 | TECHNICAL FIELDS SEARCHED (Int. Cl.³)<br><br>H 01 M |
| D | US - A - 3 926 669 (GTE LABORA-TORIES INC.<br>* Column 5, lines 25-40 *<br><br>-- | 1-10 | |
|  | DE - A - 2 263 115 (GTE LABORA-TORIES INC.)<br>* Page 3, lines 18-20; paragraph pages 9,10 *<br><br>---- | 1-10 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-07-1981 | STANGE |

EPO Form 1503,1  06.78